(19) Europäisches Patentamt / European Patent Office / Office européen des brevets

(11) **EP 4 037 901 B1**

(12) **FASCICULE DE BREVET EUROPEEN**

(45) Date de publication et mention de la délivrance du brevet:
**07.05.2025 Bulletin 2025/19**

(21) Numéro de dépôt: **20775678.4**

(22) Date de dépôt: **28.09.2020**

(51) Classification Internationale des Brevets (IPC):
**B32B 17/10** $^{(2006.01)}$   **C03C 17/36** $^{(2006.01)}$
**B29L 31/30** $^{(2006.01)}$

(52) Classification Coopérative des Brevets (CPC):
**C03C 17/3618; B32B 17/10036; B32B 17/10174;**
**B32B 17/10201; B32B 17/10229; C03C 17/36;**
**C03C 17/3626; C03C 17/3639; C03C 17/3644;**
**C03C 17/3649; C03C 17/3652; C03C 17/366;**
**C03C 17/3681;** B29L 2031/3052

(86) Numéro de dépôt international:
**PCT/EP2020/077089**

(87) Numéro de publication internationale:
**WO 2021/063879 (08.04.2021 Gazette 2021/14)**

(54) **VITRAGE FEUILLETE A BASSE TRANSMISSION LUMINEUSE ET HAUTE SELECTIVITE ET PROCÉDÉ DE FABRICATION**

VERBUNDVERGLASUNG MIT GERINGER LICHTDURCHLÄSSIGKEIT UND HOHER SELEKTIVITÄT UND HERSTELLUNGSVERFAHREN

LAMINATED GLAZING HAVING LOW LIGHT TRANSMISSION AND HIGH SELECTIVITY AND MANUFACTURING PROCESS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.09.2019 FR 1910832**

(43) Date de publication de la demande:
**10.08.2022 Bulletin 2022/32**

(73) Titulaire: **Saint-Gobain Glass France**
**92400 Courbevoie (FR)**

(72) Inventeurs:
• **MONMEYRAN, Corentin**
**75219 PARIS (FR)**
• **SCHIAVONI, Michele**
**75014 PARIS (FR)**

(74) Mandataire: **Saint-Gobain Recherche**
**41 Quai Lucien Lefranc**
**93300 Aubervilliers (FR)**

(56) Documents cités:
WO-A1-02/48065          WO-A1-2018/178547
WO-A1-2019/110172      WO-A2-2005/007592
US-A1- 2007 104 965    US-A1- 2014 022 630
US-A1- 2018 141 314

# EP 4 037 901 B1

**Description**

L'invention concerne les vitrages feuilletés comprenant deux substrats transparents séparés par un intercalaire de feuilletage, destinés à équiper les bâtiments ou véhicules. Un des substrats transparents est revêtu d'un revêtement fonctionnel pouvant agir sur le rayonnement solaire et/ou le rayonnement infrarouge et un revêtement à faible émissivité (dit low E) est disposé sur l'une des faces du deuxième substrat.

Les vitrages feuilletés sont largement utilisés dans les véhicules et les bâtiments. Ils sont connus pour éviter les risques de blessures au cas où ils sont brisés. En outre, ils doivent laisser passer une quantité suffisante de lumière tout en ne laissant pas passer la totalité du rayonnement solaire incident pour ne pas échauffer excessivement l'intérieur du véhicule ou du bâtiment. Le respect de ces deux exigences constitue un compromis. Il existe donc toujours une demande pour des vitrages feuilletés à sélectivité accrue en terme de transparence à la lumière par rapport à la transparence à l'énergie.

Ces vitrages sont destinés aussi bien à:

- diminuer l'effort de climatisation et/ou d'empêcher une surchauffe excessive, vitrages dits « de contrôle solaire » qu'à :
- diminuer la quantité d'énergie dissipée vers l'extérieur, vitrages dits « bas émissifs ».

Dans la suite de la description, le terme « fonctionnel » qualifiant « revêtement fonctionnel » signifie « pouvant agir sur le rayonnement solaire et/ou le rayonnement infrarouge ».

Selon les climats des pays où sont installés ces vitrages, notamment, selon les niveaux d'ensoleillement, les performances en termes de transmission lumineuse et de facteur solaire recherchées peuvent varier. Par conséquent, différentes gammes de vitrages caractérisées par leur niveau de transmission lumineuse sont développées.

Par exemple, dans les pays où les niveaux d'ensoleillement sont élevés, il existe une demande forte de vitrages présentant une transmission lumineuse de l'ordre de 25 à 45 % et des valeurs de facteur solaire suffisamment basse.

La sélectivité « S » permet d'évaluer la performance de ces vitrages. Elle correspond au rapport de la transmission lumineuse $TL_{vis}$ dans le visible du vitrage sur le facteur solaire FS du vitrage ($S = TL_{vis} / FS$). Le facteur solaire « FS ou g » correspond au rapport en % entre l'énergie totale entrant dans le local à travers le vitrage et l'énergie solaire incidente.

L'obtention d'une sélectivité élevée ne doit pas se faire au détriment de l'aspect esthétique et en particulier de la couleur. En général, on cherche à obtenir une esthétique la plus neutre possible en réflexion extérieure, intérieure et en transmission.

L'approche traditionnelle pour obtenir à la fois une sélectivité élevée et une excellente neutralité en couleur consiste à développer des revêtements fonctionnels de plus en plus sophistiqués.

Des vitrages sélectifs connus comprennent des substrats transparents revêtus d'un revêtement fonctionnel comprenant un empilement de plusieurs couches fonctionnelles métalliques, chacune disposée entre deux revêtements diélectriques. Ces revêtements fonctionnels sont généralement obtenus par une succession de dépôts effectués par pulvérisation cathodique éventuellement assistée par champ magnétique.

De manière conventionnelle, les faces d'un vitrage sont désignées à partir de l'extérieur du bâtiment et en numérotant les faces des substrats de l'extérieur vers l'intérieur de l'habitacle ou du local qu'il équipe. Cela signifie que la lumière solaire incidente traverse les faces dans l'ordre croissant de leur numéro.

L'adaptation de la colorimétrie de ces vitrages est obtenue en jouant sur la nature, les épaisseurs des couches ou revêtements constituant les revêtements fonctionnels.

La complexité des revêtements fonctionnels rend difficile l'obtention conjointe de bonnes performances thermique et d'une excellente neutralité en couleur.

Enfin, la complexité de ces revêtements fonctionnels rend également difficile le maintien d'une qualité constante de production pour un revêtement fonctionnel donné. En effet, en multipliant le nombre de couches et de matériaux constituant ces revêtements fonctionnels, il est de plus en plus difficile d'adapter les réglages des conditions de dépôt afin d'obtenir des revêtements fonctionnels de couleur identique provenant de deux lots produits sur le même site de production ou de deux lots produits sur deux sites de production différents.

Dans le cas d'un vitrage feuilleté, on numérote toutes les faces des substrats transparent mais on ne numérote pas les faces des intercalaires de feuilletage. La face 1 est à l'extérieur du bâtiment et constitue donc la paroi extérieure du vitrage, la face 4 est à l'intérieur du bâtiment et constitue donc la paroi intérieure du vitrage, les faces 2 et 3 étant au contact de l'intercalaire de feuilletage.

Comparés aux doubles vitrages, il est plus difficile d'obtenir une bonne sélectivité avec des vitrages feuilletés. Premièrement, ils ne bénéficient pas des propriétés d'isolation thermique procurées par la cavité, généralement remplie d'argon, ménagée entre les deux feuilles de verre des doubles vitrages. Deuxièmement, les revêtements pouvant agir sur le rayonnement solaire et/ou le rayonnement infrarouge, à base de couches fonctionnelles d'argent ne peuvent pas être disposés sur une face extérieure du vitrage. Leur résistance aux conditions de l'environnement ne les rendrait pas suffisamment durables. Ils doivent donc être positionnés en face 2 ou 3. Cependant, il est apparu que, si une couche basse émissive est au contact de la couche intercalaire de feuilletage, ses propriétés de basse émissivité n'ont plus d'impact sur la thermique du vitrage.

Le document WO 2006/108980 A2 décrit des vitrages feuilletés avec un revêtement fonctionnel disposé en face 2, comportant deux couches d'argent intercalées entre des revêtements diélectriques. Les feuilles de verre utilisées sont des verres teintés. Les transmissions lumineuses obtenues sont respectivement de 9,6 et 24,8 % soit plus basses que la cible recherchée dans la présente invention. Le facteur solaire (TE + qi), qui additionne de la quantité de chaleur transmise et réémise, n'est pas pris en compte.

Le document EP 1 060 876 A2 décrit des vitrages feuilletés avec un revêtement fonctionnel disposé en face 2 et un revêtement low E en face 4. La transmission lumineuse obtenue est de 31 %. 69% du rayonnement visible sont réfléchis ou selon le cas, absorbés par la couche calorifique, la couche low-E et la feuille de PVB teintée.

Le revêtement low E en face 4 est une couche de $SnO_2$ dopée au fluor, déposée par pyrolyse. Cependant, les couches déposées par cette méthode ont des défauts par rapport à des couches déposées par pulvérisation cathodique magnétron, notamment en terme de mécanique et d'esthétique.

Le document WO 2019/110172 divulgue un vitrage feuilleté comprenant :

- un revêtement de protection solaire qui réfléchit ou absorbe sensiblement les rayons en dehors du spectre visible du rayonnement solaire, en particulier les rayons infrarouges,
- un revêtement réfléchissant le rayonnement thermique contenant un oxyde conducteur transparent.

Le document WO 02/48065 divulgue un vitrage comprenant un substrat transparent muni d'un empilement de couches minces comportant une alternance de n couche(s) fonctionnelle(s) à propriétés de réflexion dans l'infrarouge et/ou dans le rayonnement solaire et de n+1 revêtements composés d'une ou plusieurs couches en matériau diélectrique dont au moins une couche absorbante dans le visible est insérée entre deux couches de matériau diélectrique d'au moins un desdits revêtements.

Le but de l'invention est donc de pallier ces inconvénients en mettant au point un vitrage feuilleté présentant à la fois de bonnes performances optiques et thermiques, tout en garantissant l'aspect esthétique recherché. Les performances optiques recherchées sont une transmission lumineuse comprise entre 25 et 44 %, de préférence comprise entre 30 et 40%, une réflexion lumineuse inférieure à 30%, voire inférieure à 25% et une sélectivité la plus importante possible.

L'invention concerne un vitrage feuilleté selon la revendication 1 comprenant deux substrats transparents reliés par un intercalaire de feuilletage, chaque substrat comprenant deux faces principales. Le premier substrat transparent est revêtu sur l'une de ses faces principales d'un revêtement fonctionnel pouvant agir sur le rayonnement solaire et/ou le rayonnement infrarouge, ledit revêtement comportant au moins une couche fonctionnelle métallique. Au moins une face du deuxième substrat comprend un revêtement bas émissif (low E), ledit revêtement bas émissif comportant au moins une couche bas émissive entre deux revêtements diélectriques.

Selon un mode particulier de l'invention, le revêtement bas émissif est disposé en face 4, et le revêtement fonctionnel est déposé en face 2 du vitrage feuilleté, les faces étant numérotées de l'extérieur vers l'intérieur du vitrage.

Le revêtement fonctionnel du premier substrat comprend une ou plusieurs couches fonctionnelles métalliques, chacune disposée entre deux revêtements diélectriques.

En particulier, le revêtement fonctionnel du premier substrat comprend en partant du substrat :

- un revêtement diélectrique inférieur,
- une couche métallique,
- un revêtement diélectrique intermédiaire,
- une couche métallique,
- un revêtement diélectrique supérieur.

Le revêtement fonctionnel présente avantageusement un rapport Transmission lumineuse (TL) / Transmission énergétique (TE) aussi haut que possible, en particulier compris entre 1,20 et 2,50, de préférence compris entre 1,40 et 2,20 et de manière encore préférée entre 1,50 et 2,00.

La ou les couches fonctionnelles métalliques du revêtement fonctionnel du premier substrat sont des couches à base d'argent.

Le revêtement bas émissif du deuxième substrat comporte:

- un premier revêtement diélectrique,
- une couche basse émissivité, choisie parmi les oxydes conducteurs transparents,
- un deuxième revêtement diélectrique.

En particulier, l'émissivité de ce revêtement est inférieure à 45%, de préférence inférieure à 40% et de manière encore préférée inférieure à 38%.

Les épaisseurs des revêtements diélectriques, par exemple $SiO_2$ ou $Si_3N_4$ du revêtement du deuxième substrat, peuvent être comprises entre 5 et 100 nm, de préférence entre 15 et 80 nm, et de manière encore préférée entre 20 et 75 nm.

Un des deux revêtements (fonctionnel ou bas émissif) comporte une couche absorbante. Le revêtement fonctionnel pouvant agir sur le rayonnement solaire et/ou le rayonnement infrarouge et/ou le revêtement bas émissif comporte une couche absorbante. La couche absorbante absorbe le rayonnement solaire dans la partie visible du spectre.

L'épaisseur de cette couche absorbante est comprise entre 2 et 100 nm, de préférence entre 4 et 50 nm, et de manière encore préférée entre 5 et 25 nm.

Le vitrage selon l'invention présente une transmission lumineuse comprise entre 25 et 44 %, de préférence comprise entre 30 et 40%.

Toutes les caractéristiques énergétiques lumineuses décrites sont obtenues selon les principes et méthodes de la norme européenne EN 410 se rapportant à la détermination des caractéristiques lumineuses et solaires des vitrages utilisés dans le verre pour la construction.

De manière conventionnelle, les indices de réfraction sont mesurés à une longueur d'onde de 550 nm.

La transmission énergétique TE correspond au pourcentage du flux d'énergie solaire transmis directement à travers le vitrage.

Les caractéristiques lumineuses sont mesurées selon l'illuminant D65 à 2° perpendiculairement au vitrage (sauf indications contraires) :

- TL correspond à la transmission lumineuse dans le visible en %,
- Rext correspond à la réflexion lumineuse extérieure dans le visible en %, observateur côté espace extérieur,
- Rint correspond à la réflexion lumineuse intérieure dans le visible en %, observateur coté espace intérieur,
- a*T et b*T correspondent aux couleurs en transmission a* et b* dans le système L*a*b*,
- a*Rext et b*Rext correspondent aux couleurs en réflexion a* et b* dans le système L*a*b*, observateur côté espace extérieur,
- a*Rint et b*Rint correspondent aux couleurs en réflexion a* et b* dans le système L*a*b*, observateur côté espace intérieur.

Le revêtement fonctionnel et/ou le revêtement low E sont déposés par pulvérisation cathodique assistée par un champ magnétique (procédé magnétron). Selon ce mode de réalisation avantageux, toutes les couches des revêtements sont déposées par pulvérisation cathodique assistée par un champ magnétique.

L'invention concerne également le procédé d'obtention d'un vitrage selon l'invention, dans lequel on dépose les couches des revêtements par pulvérisation cathodique magnétron.

Les caractéristiques préférées qui figurent dans la suite de la description sont applicables aussi bien au vitrage selon l'invention que, le cas échéant, au procédé, à l'utilisation, au bâtiment ou au véhicule selon l'invention.

A défaut de stipulation spécifique, les expressions « au-dessus » et « en-dessous » ne signifient pas nécessairement que deux couches et/ou revêtements sont disposés au contact l'un de l'autre. Lorsqu'il est précisé qu'une couche est déposée « au contact » d'une autre couche ou d'un revêtement, cela signifie qu'il ne peut y avoir une (ou plusieurs) couche(s) intercalée(s) entre ces deux couches (ou couche et revêtement).

Dans la présente description, sauf autre indication, l'expression « à base de », utilisée pour qualifier un matériau ou une couche quant à ce qu'il ou elle contient, signifie que la fraction massique du constituant qu'il ou elle comprend est d'au moins 50%, en particulier au moins 70%, de préférence au moins 90%.

Sauf mention contraire, les épaisseurs évoquées dans le présent document sans autres précisions sont des épaisseurs physiques, réelles ou géométriques dénommées Ep et sont exprimées en nanomètres (et non pas des épaisseurs optiques). L'épaisseur optique Eo est définie comme l'épaisseur physique de la couche considérée multipliée par son indice de réfraction à la longueur d'onde de 550 nm : Eo = n*Ep. L'indice de réfraction étant une valeur adimensionnelle, on peut considérer que l'unité de l'épaisseur optique est celle choisie pour l'épaisseur physique.

Selon l'invention, un revêtement diélectrique correspond à une séquence de couches comprenant au moins une couche diélectrique. Si un revêtement diélectrique est composé de plusieurs couches diélectriques, l'épaisseur optique du revêtement diélectrique correspond à la somme des épaisseurs optiques des différentes couches diélectriques constituant le revêtement diélectrique.

Les substrats sont en particulier en verre, notamment silico-sodo-calcique ou en matière organique polymérique, de préférence en verre clair.

Selon l'invention, une couche absorbante qui absorbe le rayonnement solaire dans la partie visible du spectre est une couche qui absorbe certaines longueurs d'onde dans le visible. L'indice optique d'une couche absorbante peut être décomposé en une partie réelle et une partie imaginaire. La partie réelle, n, correspond à l'indice de réfraction. La partie imaginaire ou facteur d'atténuation k, est liée à l'absorption de la lumière par la couche.

Selon l'invention :

- la réflexion lumineuse correspond à la réflexion du rayonnement solaire dans la partie visible du spectre,
- la transmission lumineuse correspond à la transmission du rayonnement solaire dans la partie visible du spectre,
- l'absorption lumineuse correspond à l'absorption du rayonnement solaire dans la partie visible du spectre.

La couche absorbante est choisie parmi :

- les couches à base d'un ou plusieurs métaux et/ou métalloïdes,
- les couches de nitrure d'un ou plusieurs métaux et/ou métalloïdes,
- les couches d'oxynitrure d'un ou plusieurs métaux et/ou métalloïdes,

d'éléments choisis parmi le palladium, le niobium, le tungstène, le fer notamment sous forme d'acier inoxydable, le titane, le chrome, le molybdène, le zirconium, le nickel, le tantale, le zinc, l'étain, le silicium et le hafnium.

La couche absorbante peut être essentiellement sous forme élémentaire métal ou métalloïde. Selon l'invention, un matériau sous forme élémentaire signifie que ce matériau n'est pas volontairement combiné ou lié à un autre élément tel que l'oxygène, l'azote ou le carbone. Cela signifie par exemple que ce matériau n'est ni sous forme oxydé, nitruré, carburée.

Bien qu'essentiellement sous forme élémentaire, le métal ou le métalloïde peut présenter des traces de nitruration dues à l'atmosphère de dépôt polluée par l'azote des zones de dépôt voisines. La couche absorbante peut être une couche d'un métal ou d'un métalloïde choisi parmi le silicium, le palladium, le niobium, le tungstène, l'acier inoxydable, le titane, le chrome, le molybdène, le zirconium, le nickel, le tantale, le zinc, des alliages de ces éléments comme NiCr, NiCrW, WTa, WCr, NbZr, TaNiV, CrZr et NbCr.

La couche absorbante peut être un nitrure ou un sous-nitrure, c'est-à-dire un nitrure sous-stoechiométrique en azote. De préférence, la couche absorbante est un couche de nitrure choisi parmi SnZnN, TiN, NiCrWN, NiVN, TaN, CrN, ZrN, CrZrN, TiAlN, TiZrN, WN, SiZrN et SiNiCrN.

Selon les modes de réalisation préférés, la couche absorbante est choisie parmi une couche de nitrure de nickel et/ou de chrome, une couche de nitrure de titane, une couche de nitrure de niobium ou une couche à base de silicium.

La couche à base de nitrure de nickel et de chrome présente par ordre de préférence croissant un rapport en poids de nickel sur chrome compris entre 90/10 et 70/30, de préférence un rapport 80/20.

L'épaisseur de la couche absorbante doit être adaptée en particulier en fonction de la nature plus ou moins absorbante du matériau choisi. Il est donc judicieux de multiplier la valeur de l'épaisseur géométrique par une valeur indicative de la nature absorbante du matériau. De même qu'on peut définir l'épaisseur optique d'une couche à partir du produit de son épaisseur géométrique par son indice optique (réel) n, on peut définir une « épaisseur effective d'absorption » par l'Equation ci-dessous, dans laquelle $t_{abs.\ effective}$ est l'épaisseur effective d'absorption, $t_{geo}$ l'épaisseur géométrique, n la partie réelle de l'indice optique et k la partie imaginaire de l'indice optique :

$$t_{abs.\ effective} = 2 \times t_{geo} \times n \times k$$

En particulier, l'épaisseur effective d'absorption est comprise entre 5 et 1000 nm, de préférence entre 25 et 500 nm, et de manière encore préférée entre 50 et 200 nm.

La nature absorbante de la couche a pour effet que cette couche diminue nécessairement la transmission lumineuse du matériau ou du vitrage la comprenant. Pour atténuer cet effet, il est possible d'adjoindre à la couche absorbante des revêtements diélectriques comprenant des couches diélectriques dont les matériaux et épaisseurs sont judicieusement choisis. Par exemple, la couche absorbante peut être disposée entre deux revêtements diélectriques comprenant des couches diélectriques à haut et bas indices de réfraction permettant dans une certaine mesure de moduler la transmission lumineuse et l'absorption.

Ces revêtements diélectriques permettent également de protéger la couche absorbante.

La couche absorbante peut faire partie du revêtement fonctionnel. Dans ce cas, le revêtement fonctionnel du premier substrat peut comporter une couche absorbante. En particulier, le revêtement fonctionnel du premier substrat peut comprendre en partant du substrat :

- un revêtement diélectrique inférieur,
- une couche fonctionnelle métallique,
- un revêtement diélectrique intermédiaire, comportant une couche absorbante
- une couche fonctionnelle métallique,

- un revêtement diélectrique supérieur.

Selon un mode de réalisation avantageux, lorsque le revêtement fonctionnel du premier substrat comporte une couche absorbante :

- le revêtement bas émissif du deuxième substrat comporte une couche conductrice transparente, et/ou
- le revêtement bas émissif du deuxième substrat ne comporte pas de couche absorbante.

Toutefois, il n'est pas exclu de prévoir une couche absorbante à la fois dans le revêtement fonctionnel du premier substrat et dans le revêtement bas émissif du deuxième substrat.

La couche absorbante peut faire partie du revêtement bas émissif (ou Low E). Dans ce cas, le revêtement bas émissif du deuxième substrat peut comporter une couche absorbante.

Selon un mode de réalisation, la couche absorbante peut être une couche distincte de la couche bas émissive.

Selon un autre mode de réalisation, la couche absorbante et la couche bas émissive sont une seule et même couche. Cela signifie que la couche bas émissive est également une couche absorbante. Par exemples, c'est notamment le cas de couches à base de nitrure de titane.

Le revêtement low E peut comprendre un ou plusieurs revêtements diélectriques et une couche absorbante notamment bas émissive.

Le revêtement low E peut comprendre en partant du substrat :

- un revêtement diélectrique inférieur,
- une couche absorbante notamment bas émissive,
- un revêtement diélectrique supérieur.

Le revêtement low E peut comprendre en partant du substrat :

- un revêtement diélectrique inférieur,
- une couche absorbante notamment bas émissive,
- un revêtement diélectrique intermédiaire,
- une couche absorbante notamment bas émissive,
- un revêtement diélectrique supérieur.

Selon un mode de réalisation, lorsque le revêtement bas émissif du deuxième substrat comporte une couche absorbante, le revêtement fonctionnel du premier substrat ne comporte pas de couche absorbante.

Pour obtenir un vitrage appartenant à une certaine gamme de transmission lumineuse, on choisit un revêtement fonctionnel appartenant à une gamme de transmission lumineuse auquel on adjoint le revêtement low E adapté.

Le revêtement fonctionnel peut comprendre une ou plusieurs couches fonctionnelles métalliques à base d'argent, chacune disposée entre deux revêtements diélectriques. Le revêtement fonctionnel peut notamment comprendre une, deux, trois ou quatre couches fonctionnelles métalliques. Selon ces modes de réalisation :

- le revêtement fonctionnel comprend au moins une couche métallique fonctionnelle à base d'argent, ou
- le revêtement fonctionnel comprend au moins deux couches métalliques fonctionnelles à base d'argent, ou
- le revêtement fonctionnel comprend au moins trois couches métalliques fonctionnelles à base d'argent.

Les couches fonctionnelles métalliques à base d'argent comprennent au moins 95,0 %, de préférence au moins 96,5 % et mieux au moins 98,0 % en masse d'argent par rapport à la masse de la couche fonctionnelle. De préférence, une couche métallique fonctionnelle à base d'argent comprend moins de 1,0 % en masse de métaux autres que de l'argent par rapport à la masse de la couche métallique fonctionnelle à base d'argent.

De préférence, les épaisseurs des couches métalliques fonctionnelles sont sensiblement identiques.

L'empilement peut comprendre en outre au moins une couche de blocage située au contact d'une couche métallique fonctionnelle.

Les couches de blocage ont traditionnellement pour fonction de protéger les couches fonctionnelles d'une éventuelle dégradation lors du dépôt du revêtement antireflet supérieur et lors d'un éventuel traitement thermique à haute température, du type recuit, bombage et/ou trempe.

Les couches de blocage sont choisies parmi les couches métalliques à base d'un métal ou d'un alliage métallique, les couches de nitrure métallique, les couches d'oxyde métallique et les couches d'oxynitrure métallique d'un ou plusieurs éléments choisis parmi le titane, le nickel, le chrome et le niobium telles qu'une couche de Ti, TiN, TiOx, Nb, NbN, Ni, NiN, Cr, CrN, NiCr, NiCrN. Lorsque ces couches de blocage sont déposées sous forme métallique, nitrurée ou oxynitrurée, ces couches peuvent subir une oxydation partielle ou totale selon leur épaisseur et la nature des couches qui les entourent, par exemple, au moment du dépôt de la couche suivante ou par oxydation au contact de la couche sous-jacente.

Selon des modes de réalisation avantageux de l'invention, la ou les couches de blocage satisfont une ou plusieurs des conditions suivantes :

- chaque couche métallique fonctionnelle est au contact d'au moins une couche de blocage choisie parmi une sous-couche de blocage et une surcouche de blocage, et/ou
- chaque couche métallique fonctionnelle est au contact d'une surcouche de blocage, et/ou
- l'épaisseur de chaque couche de blocage est d'au moins 0,1 nm, de préférence comprise entre 0,2 et 2,0 nm.

Selon l'invention, les couches de blocage sont considérées comme ne faisant pas partie d'un revêtement diélectrique. Cela signifie que leur épaisseur n'est pas prise en compte dans le calcul de l'épaisseur optique du revêtement diélectrique situé à leur contact.

Par « couche diélectrique » au sens de la présente invention, il faut comprendre que du point de vue de sa nature, le matériau est « non métallique », c'est-à-dire n'est pas un métal. Dans le contexte de l'invention, ce terme désigne un matériau présentant un rapport n/k sur toute la plage de longueur d'onde du visible (de 380 nm à 780 nm) égal ou supérieur à 5.

Les couches diélectriques des revêtements présentent les caractéristiques suivantes seules ou en combinaison :

- elles sont déposées par pulvérisation cathodique assistée par champ magnétique,
- elles sont choisies parmi les oxydes ou nitrures d'un ou plusieurs éléments choisi(s) parmi le titane, le silicium, l'aluminium, le zirconium, l'étain et le zinc,
- elles ont une épaisseur supérieure à 2 nm, de préférence comprise entre 4 et 100 nm.

Selon des modes de réalisation avantageux de l'invention, les revêtements diélectriques des revêtements fonctionnels satisfont une ou plusieurs des conditions suivantes :

- les couches diélectriques peuvent être à base d'oxyde ou de nitrure d'un ou plusieurs éléments choisis parmi le silicium, le zirconium, le titane, l'aluminium, l'étain, le zinc, et/ou
- au moins un revêtement diélectrique comporte au moins une couche diélectrique à fonction barrière, et/ou
- chaque revêtements diélectrique comporte au moins une couche diélectrique à fonction barrière, et/ou
- les couches diélectriques à fonction barrière sont à base de composés de silicium et/ou d'aluminium choisis parmi les oxydes tels que $SiO_2$ et $Al_2O_3$, les nitrures de silicium $Si_3N_4$ et AlN et les oxynitrures $SiO_xN_y$ et $AlO_xN_y$, à base d'oxyde de zinc et d'étain ou à base d'oxyde de titane,
- les couches diélectriques à fonction barrière sont à base de composés de silicium et/ou d'aluminium comprennent éventuellement au moins un autre élément, comme l'aluminium, le hafnium et le zirconium, et/ou
- au moins un revêtement diélectrique comprend au moins une couche diélectrique à fonction stabilisante, et/ou
- chaque revêtement diélectrique comprend au moins une couche diélectrique à fonction stabilisante, et/ou
- les couches diélectriques à fonction stabilisante sont de préférence à base d'oxyde choisi parmi l'oxyde de zinc, l'oxyde d'étain, l'oxyde de zirconium ou un mélange d'au moins deux d'entre eux, et/ou
- les couches diélectriques à fonction stabilisante sont de préférence à base d'oxyde cristallisé, notamment à base d'oxyde de zinc, éventuellement dopé à l'aide d'au moins un autre élément, comme l'aluminium, et/ou
- chaque couche fonctionnelle est au-dessus d'un revêtement diélectrique dont la couche supérieure est une couche diélectrique à fonction stabilisante, de préférence à base d'oxyde de zinc et/ou en-dessous d'un revêtement diélectrique dont la couche inférieure est une couche diélectrique à fonction stabilisante, de préférence à base d'oxyde de zinc.

Lorsque le revêtement low E comporte une couche absorbante (exemple avec TiN), chaque revêtement diélectrique est constitué uniquement d'une ou de plusieurs couches diélectriques. De préférence, il n'y a pas de couche absorbante dans les revêtements diélectriques afin de ne pas diminuer encore la transmission lumineuse.

L'épaisseur de la couche absorbante peut, dans le cas d'une couche de type TiN, être comprise entre 10 et 60 nm, de préférence entre 15 et 40 nm.

Lorsque le revêtement low E ne comporte pas de couche absorbante (exemple avec ITO), un des revêtements diélectriques du revêtement fonctionnel comporte une couche absorbante. Dans ce cas, de préférence le revêtement diélectrique intermédiaire comporte une couche absorbante. Eventuellement, le revêtement diélectrique inférieur comporte une couche absorbante.

Lorsque la couche absorbante est de type NbN, son épaisseur peut être comprise entre 3 et 15 nm, de préférence entre 4 et 10 nm.

Lorsqu'un revêtement diélectrique d'un revêtement fonctionnel comprend une couche absorbante, pour laquelle l'indice de réfraction à 550 nm comprend une partie imaginaire de la fonction diélectrique non nulle (ou non négligeable), l'épaisseur de cette couche n'est pas prise en compte pour le calcul de l'épaisseur optique du revêtement diélectrique.

Les couches diélectriques peuvent présenter une fonction barrière. On entend par couches diélectriques à fonction barrière (ci-après couche barrière), une couche en un matériau apte à faire barrière à la diffusion de l'oxygène et de l'eau à haute température, provenant de l'atmosphère ambiante ou du substrat transparent, vers la couche fonctionnelle. De telles couches diélectriques sont choisies parmi les couches :

- à base de composés de silicium et/ou d'aluminium choisis parmi les oxydes tels que $SiO_2$ et $Al_2O_3$, les nitrures tels que les nitrures tels que $Si_3N_4$ et AlN, et les oxynitrures tels que $SiO_xN_y$, AlOxNy éventuellement dopé à l'aide d'au moins un autre élément,
- à base d'oxyde de zinc et d'étain,
- à base d'oxyde de titane.

De préférence, chaque revêtement comporte au moins une couche diélectrique constituée :

- d'un nitrure ou d'un oxynitrure d'aluminium et/ou de silicium ou
- d'un oxyde mixte de zinc et d'étain, ou
- d'un oxyde de titane.

Ces couches diélectriques ont une épaisseur :

- inférieure ou égale à 40 nm, inférieure ou égale à 30 nm ou inférieure ou égale à 25 nm, et/ou
- supérieure ou égale à 5 nm, supérieure ou égale à 10 nm ou supérieure ou égale à 15 nm.

Les revêtements fonctionnels de l'invention peuvent comprendre des couches diélectriques à fonction stabilisante. Au sens de l'invention, « stabilisante » signifie que l'on sélectionne la nature de la couche de façon à stabiliser l'interface entre la couche fonctionnelle et cette couche. Cette stabilisation conduit à renforcer l'adhérence de la couche fonctionnelle aux couches qui l'entourent, et de fait elle va s'opposer à la migration de son matériau constitutif.

La ou les couches diélectriques à fonction stabilisante peuvent se trouver directement au contact d'une couche fonctionnelle ou séparées par une couche de blocage.

De préférence, la dernière couche diélectrique de chaque revêtement diélectrique situé en-dessous d'une couche fonctionnelle est une couche diélectrique à fonction stabilisante.

Il est également avantageux d'avoir une couche fonction stabilisante, par exemple, à base d'oxyde de zinc au-dessus d'une couche fonctionnelle, pour en augmenter l'adhésion et s'opposer de manière optimale à la diffusion du côté de l'empilement opposé au substrat.

La ou les couches diélectriques à fonction stabilisante peuvent donc se trouver au-dessus et/ou en dessous d'au moins une couche fonctionnelle ou de chaque couche fonctionnelle, soit directement à son contact ou soit séparées par une couche de blocage.

Avantageusement, chaque couche diélectrique à fonction barrière est séparée d'une couche fonctionnelle par au moins une couche diélectrique à fonction stabilisante.

La couche d'oxyde de zinc peut être éventuellement dopée à l'aide d'au moins un autre élément, comme l'aluminium. L'oxyde de zinc est cristallisé. La couche à base d'oxyde de zinc comprend, par ordre de préférence croissant au moins 90,0 %, au moins 92 %, au moins 95 %, au moins 98,0 % en masse de zinc par rapport à la masse d'éléments autres que de l'oxygène dans la couche à base d'oxyde de zinc.

De préférence, les revêtements diélectriques des revêtements fonctionnels comprennent une couche diélectrique à base d'oxyde de zinc située en-dessous et directement au contact de la couche métallique à base d'argent.

Les couches d'oxyde de zinc ont, par ordre de préférence croissant, une épaisseur :

- d'au moins 3,0 nm, d'au moins 4,0 nm, et/ou
- d'au plus 25 nm, d'au plus 10 nm, d'au plus 8,0 nm.

Le revêtement fonctionnel peut éventuellement comprendre une couche supérieure de protection. La couche supérieure de protection est de préférence la dernière couche de l'empilement, c'est-à-dire la couche la plus éloignée du substrat revêtu de l'empilement. Ces couches supérieures de protection sont considérées comme comprises dans le dernier revêtement diélectrique. Ces couches ont en général une épaisseur comprise entre 2 et 10 nm, de préférence 2 et 5 nm.

La couche de protection peut être choisie parmi une couche de titane, de zirconium, d'hafnium, de zinc et/ou d'étain, ce ou ces métaux étant sous forme métallique, oxydée ou nitrurée. Avantageusement, la couche de protection est une couche d'oxyde de titane, une couche d'oxyde de zinc et d'étain ou une couche à base d'oxyde de titane et de zirconium.

Un mode de réalisation particulièrement avantageux du revêtement fonctionnel défini en partant du substrat transparent comprenant :

- un premier revêtement diélectrique comprenant au moins une couche à fonction barrière et une couche diélectrique à fonction stabilisante,
- éventuellement une couche de blocage,
- une première couche fonctionnelle,
- éventuellement une couche de blocage,
- un deuxième revêtement diélectrique comprenant au moins une couche diélectrique à fonction stabilisante et une couche à fonction barrière,
- éventuellement une couche de protection.

Selon un autre mode de réalisation particulièrement avantageux du revêtement fonctionnel, il comprend :

- un premier revêtement diélectrique comprenant au moins une couche à fonction barrière et une couche diélectrique à fonction stabilisante,
- éventuellement une couche de blocage,
- une première couche fonctionnelle,
- éventuellement une couche de blocage,
- un deuxième revêtement diélectrique comprenant au moins une couche diélectrique à fonction stabilisante inférieure, une couche à fonction barrière et une couche diélectrique à fonction stabilisante supérieure,
- éventuellement une couche de blocage,
- une deuxième couche fonctionnelle,
- éventuellement une couche de blocage,
- un troisième revêtement diélectrique comprenant au moins une couche diélectrique à fonction stabilisante, une couche à fonction barrière,
- éventuellement une couche de protection.

Selon encore un autre mode de réalisation particulièrement avantageux, l'empilement du revêtement fonctionnel défini en partant du substrat transparent comprend :

- un premier revêtement diélectrique comprenant au moins une couche à fonction barrière et une couche diélectrique à fonction stabilisante,
- éventuellement une couche de blocage,
- une première couche fonctionnelle,
- éventuellement une couche de blocage,
- un deuxième revêtement diélectrique comprenant au moins une couche diélectrique à fonction stabilisante inférieure, une couche à fonction barrière et une couche diélectrique à fonction stabilisante supérieure,
- éventuellement une couche de blocage,
- une deuxième couche fonctionnelle,
- éventuellement une couche de blocage,
- un troisième revêtement diélectrique comprenant au moins une couche diélectrique à fonction stabilisante inférieure, une couche à fonction barrière, une couche diélectrique à fonction stabilisante supérieure,
- éventuellement une couche de blocage,
- une troisième couche fonctionnelle,
- éventuellement une couche de blocage,
- un quatrième revêtement diélectrique comprenant au moins une couche diélectrique à fonction stabilisante, une couche à fonction barrière,
- éventuellement une couche de protection.

Les substrats transparents selon l'invention sont de préférence en un matériau rigide minéral, comme en verre, ou organiques à base de polymères (ou en polymère).

Les substrats transparents organiques selon l'invention peuvent également être en polymère, rigides ou flexibles. Des exemples de polymères convenant selon l'invention comprennent, notamment :

- le polyéthylène,
- les polyesters tels que le polyéthylène téréphtalate (PET), le polybutylène téréphtalate (PBT), le polyéthylène naphtalate (PEN) ;
- les polyacrylates tels que le polyméthacrylate de méthyle (PMMA) ;
- les polycarbonates ;
- les polyuréthanes ;
- les polyamides ;
- les polyimides ;
- les polymères fluorés comme les fluoroesters tels que l'éthylène tétrafluoroéthylène (ETFE), le polyfluorure de vinylidène (PVDF), le polychlorotrifluorethylène (PCTFE), l'éthylène de chlorotrifluorethylène (ECTFE), les copolymères éthylène-propylène fluores (FEP) ;
- les résines photoréticulables et/ou photopolymérisables, telles que les résines thiolène, polyuréthane, uréthane-acrylate, polyester-acrylate et
- les polythiouréthanes.

Le substrat est de préférence une feuille de verre.

Le substrat est de préférence transparent, incolore (il s'agit alors d'un verre clair ou extra-clair) ou coloré, par exemple en bleu, gris ou bronze. Le verre est de préférence de type silico-sodo-calcique, mais il peut également être en verre de type borosilicate ou alumino-borosilicate.

La transmission lumineuse (TL) des substrats de type verre sodo-calcique ordinaire, sans empilement est supérieure à 89 %, de préférence de 90 %.

Un verre clair ordinaire de 4 à 6 mm d'épaisseur présente les caractéristiques lumineuses suivantes :

- une transmission lumineuse comprise entre 89 et 91,5 %,
- une réflexion lumineuse comprise entre 7 et 9,5 %,
- une absorption lumineuse comprise entre 0,3 et 3 %.

Selon un mode de réalisation préféré, le substrat est en verre, notamment silico-sodo-calcique ou en matière organique polymérique.

Le substrat possède avantageusement au moins une dimension supérieure ou égale à 1 m, voire 2 m et même 3 m. L'épaisseur du substrat varie généralement entre 0,5 mm et 19 mm, de préférence entre 0,7 et 9 mm, notamment entre 2 et 8 mm, voire entre 4 et 6 mm. Le substrat peut être plan ou bombé, voire flexible.

Les substrats revêtus peuvent subir un traitement thermique à température élevée tel qu'un recuit, par exemple par un recuit flash tel qu'un recuit laser ou flammage, une trempe et/ou un bombage. La température du traitement thermique est supérieure à 400 °C, de préférence supérieure à 450 °C, et mieux supérieure à 500°C. Le substrat revêtu du revêtement fonctionnel peut donc être bombé et/ou trempé.

Selon des modes de réalisation avantageux, le vitrage feuilleté selon l'invention permet d'atteindre notamment les performances suivantes :

- un facteur solaire g inférieur ou égal à 40 %, de préférence inférieur à 30 %, de manière encore préférée inférieur ou égal à 29 % ; et/ou
- une transmission lumineuse de préférence comprise entre 30 % et 40 %, de manière encore préférée comprise entre 32 et 38 % ; et/ou
- une sélectivité d'au moins 1,05, de préférence d'au moins 1.10 et de manière encore préférée d'au moins 1.15 ; et/ou
- une réflexion lumineuse côté extérieur inférieure ou égale à 30 %, de préférence inférieure ou égale à 25 %, et de manière encore préférée inférieure à 20% ; et/ou
- une réflexion lumineuse côté intérieur inférieure ou égale à 30 %, de préférence inférieur ou égale à 25 % ; et/ou
- des valeurs de a* et b* en réflexion extérieure comprise, par ordre de préférence croissant, entre -10 et +5, entre -8 et +1, entre -6 et 0 ; et/ou
- des valeurs de a* et b* en réflexion intérieure comprise, par ordre de préférence croissant, entre -5 et +8, entre -3 et +6, entre -1 et +3 ; et/ou
- des valeurs de a* et b* en transmission comprise, par ordre de préférence croissant, entre -10 et +5, entre -8 et +1, entre -6 et 0.

Les détails et caractéristiques avantageuses de l'invention ressortent des exemples non limitatifs suivants.

**Exemples**

**I. Revêtements fonctionnels**

Des revêtements fonctionnels (RF1, RF2) sont déposés sur des substrats en verre sodo-calcique clair d'une épaisseur de 4 mm.

Le tableau 1 ci-dessous résume les caractéristiques liées aux épaisseurs des différentes couches constituant les revêtements fonctionnels. Dans le vitrage feuilleté, la face revêtue constituera la face intérieure du premier substrat, soit la face 2 du vitrage feuilleté.

Les épaisseurs des couches sont des épaisseurs physiques, et sont exprimées en nm.

| Tableau 1 | | | |
|---|---|---|---|
| Nature | | RF1 | RF2 |
| RDS | $Si_3N_4$ | 32 | 40 |
| | ZnO | 6 | 4 |
| bloqueur | NiCr | 0.2 | 1 |
| CF | Ag | 7 | 10 |
| RDInt b | ZnO | 6 | 4 |
| | $Si_3N_4$ | - | 46 |
| CA | NbN | - | 6 |
| RDInt a | $Si_3N_4$ | 72 | 32 |
| | ZnO | 6 | 4 |
| bloqueur | NiCr | 0.2 | 1 |
| CF | Ag | 8 | 8 |
| RDI | ZnO | 6 | 4 |
| | $Si_3N_4$ | 18 | 24 |
| SUB | verre | 4 | 4 |
| RDS = revêtement diélectrique supérieur; CA = couche absorbante; CF = couche fonctionnelle ; RDInt = Revêtement diélectrique intermédiaire ; RDI = Revêtement diélectrique inférieur ; SUB = Substrat | | | |

**Nature des couches**

Les couches métalliques fonctionnelles (CF) sont des couches à base d'argent (Ag). Les couches de blocage sont des couches métalliques en alliage de nickel et de chrome (NiCr). Les revêtements diélectriques des revêtements fonctionnels comprennent des couches barrières et des couches stabilisantes. Les couches barrières sont à base de nitrure de silicium, dopé à l'aluminium ($Si_3N_4$ : Al) ou à base d'oxyde mixte de zinc et d'étain (SnZnOx). Les couches stabilisantes sont en oxyde de zinc (ZnO).

Lorsque la couche absorbante est insérée dans le revêtement fonctionnel, elle est de préférence à base de nitrure, en particulier de NbN.

Les couches ont été déposées par pulvérisation (pulvérisation dite « cathodique magnétron »).

**II. Revêtements low E**

Des revêtements low E sont déposés sur des substrats en verre sodo-calcique clair d'une épaisseur de 4 mm. La face revêtue constituera la face extérieure du deuxième substrat, soit la face 4 du vitrage feuilleté.

Lorsque le revêtement fonctionnel est l'empilement RF1 ci-dessus, le revêtement low-e est, en partant du substrat : $Si_3N_4$ (25 nm) / TiN (23nm) / $Si_3N_4$ (25 nm)

Il possède une émissivité de 35%.

Lorsque le revêtement fonctionnel est l'empilement RF2 ci-dessus, le revêtement low-e est, en partant du substrat : $Si_3N_4$ (25 nm) / ITO (95 nm) / $SiO_2$ (72 nm)

Il possède une émissivité de 20%.

### III. Configuration des vitrages feuilletés

Un premier substrat revêtu d'un revêtement fonctionnel (RF) en face 2 et un deuxième substrat revêtu d'un revêtement low E (Low E) en face 4 ont été assemblés sous forme de vitrage feuilleté, à l'aide d'un intercalaire de feuilletage traditionnel.

Les vitrages feuilletés, présentent donc une structure de type :

Premier substrat / RF / intercalaire de feuilletage / deuxième substrat / Low E

### V. Performances « contrôle solaire » et colorimétrie

Le tableau 2 ci-dessous liste les principales caractéristiques optiques des vitrages feuilletés obtenus.

| Tableau 2 | | | | | | | | | | | | | | | | |
|---|---|---|---|---|---|---|---|---|---|---|---|---|---|---|---|---|
| Matériau | R Fonctionnel | | R low E | | TL % | a*T | b*T | Rext % | a*Rext | b*Rext | Rint % | a*int | b*int | g % | TE | REext | s |
| | Position | Nature | Position | Nature | | | | | | | | | | | | | |
| Ref. 1 | Face 2 | RF1 | aucune | | 69 | -2,4 | 0,2 | 13 | -1,3 | -0,7 | 9 | -3,1 | 0,6 | 50 | 43 | 28 | 1,38 |
| Ref. 2 | Face 2 | RF2 | aucune | | 35 | -3.3 | 02 | 15 | -1,4 | -3.4 | 15 | 0,0 | 1,1 | 34 | 22 | 26 | 1,01 |
| Inv. 1 | Face 2 | RF1 | Face 4 | TiN | 35 | -4,1 | -1 5 | 15 | -1,7 | -5,8 | 16 | 0,6 | 2,1 | 28 | 19 | 29 | 1,23 |
| Inv. 2 | Face 2 | RF2 | Face 4 | ITO | 35 | -3.0 | 1.0 | 15 | -1,5 | -4.0 | 13 | -1.7 | -2.7 | 30 | 22 | 26 | 1.17 |

En comparant, Inv.1 avec Ref.1 et Ref.2, on constate que l'on obtient grâce à un revêtement fonctionnel à haute TL et une couche low E absorbante, un vitrage feuilleté présentant une transmission lumineuse dans la cible de 30 à 40 %, une réflexion lumineuse intérieure et extérieure faible, de respectivement 16 et 15 % et une sélectivité améliorée par rapport à Ref. 2 qui présente la même TL.

La TE a pu être diminuée par rapport à Ref.1 et à Ref.2.

En comparant Inv. 2 avec Ref. 1 et 2, on constate que l'on obtient grâce à un revêtement conducteur transparent et un revêtement fonctionnel à basse TL, comportant une couche absorbante, un vitrage feuilleté présentant une transmission lumineuse dans la cible de 30 à 40 %, une réflexion intérieure et extérieure faible, de respectivement 13 et 15 % et une sélectivité améliorée par rapport à Ref. 2 qui présente la même TL.

L'invention ne se restreint pas à l'usage de revêtements fonctionnels avec deux couches d'argent.

**Revendications**

**1.** Vitrage feuilleté comprenant deux substrats transparents séparés par un intercalaire de feuilletage, chaque substrat comprenant deux faces principales, le premier substrat transparent étant revêtu sur l'une de ses faces principales d'un revêtement fonctionnel pouvant agir sur le rayonnement solaire et/ou le rayonnement infrarouge, ledit revêtement comportant au moins une couche fonctionnelle métallique à base d'argent, chacune disposée entre deux revêtements diélectriques, au moins une face du deuxième substrat comprend un revêtement bas émissif, ledit revêtement bas émissif comportant :

- un premier revêtement diélectrique,
- une couche basse émissivité, choisie parmi les oxydes conducteurs transparents,
- un deuxième revêtement diélectrique,

**caractérisé en ce que**

un des deux revêtements comporte une couche absorbante ayant une épaisseur comprise entre 2 et 100 nm, choisie parmi :

- les couches à base d'un ou plusieurs métaux et/ou métalloïdes,
- les couches de nitrure d'un ou plusieurs métaux et/ou métalloïdes,
- les couches d'oxynitrure d'un ou plusieurs métaux et/ou métalloïdes,

d'éléments choisis parmi le palladium, le niobium, le tungstène, le fer notamment sous forme d'acier inoxydable, le titane, le chrome, le molybdène, le zirconium, le nickel, le tantale, le zinc, l'étain, le silicium et le hafnium. le vitrage feuilleté présente une transmission lumineuse comprise entre 25 et 44 %.

**2.** Vitrage selon l'une quelconque des revendications précédentes, **caractérisé en ce que** le revêtement bas émissif est disposé en face 4, et le revêtement fonctionnel est déposé en face 2 du vitrage feuilleté, les faces étant numérotées de l'extérieur vers l'intérieur du vitrage.

**3.** Vitrage selon l'une quelconque des revendications précédentes, **caractérisé en ce que** le revêtement fonctionnel du premier substrat comprend plusieurs couches fonctionnelles métalliques, chacune disposée entre deux revêtements diélectriques.

**4.** Vitrage selon l'une quelconque des revendications précédentes, **caractérisé en ce que** le revêtement fonctionnel du premier substrat comprend en partant du substrat :

- un revêtement diélectrique inférieur,
- une couche fonctionnelle métallique,
- un revêtement diélectrique intermédiaire,
- une couche fonctionnelle métallique,
- un revêtement diélectrique supérieur.

**5.** Vitrage selon l'une quelconque des revendications précédentes, **caractérisé en ce que** les revêtements diélectriques du revêtement du deuxième substrat, ont des épaisseurs comprises entre 5 et 100 nm, de préférence entre 15 et 80 nm, et de manière encore préférée entre 20 et 75 nm.

**6.** Vitrage selon l'une quelconque des revendications précédentes, **caractérisé en ce que** l'épaisseur de la couche absorbante est comprise entre 4 et 50 nm, et de manière encore préférée entre 5 et 25 nm.

7. Vitrage selon l'une quelconque des revendications précédentes, **caractérisé en ce qu'**il présente une transmission lumineuse comprise entre 30 et 40%.

8. Vitrage selon l'une quelconque des revendications précédente, **caractérisé en ce que** le revêtement fonctionnel du premier substrat comporte une couche absorbante.

9. Vitrage selon la revendication précédente, **caractérisé en ce que** le revêtement fonctionnel du premier substrat comprend en partant du substrat :

   - un revêtement diélectrique inférieur,
   - une couche fonctionnelle métallique,
   - un revêtement diélectrique intermédiaire,
   - une couche fonctionnelle métallique,
   - un revêtement diélectrique supérieur,

   le revêtement diélectrique intermédiaire comportant une couche absorbante.

10. Vitrage selon l'une quelconque des revendications précédentes, **caractérisé en ce que** les substrats sont en verre, notamment silico-sodo-calcique ou en matière organique polymérique.

11. Vitrage selon la revendication précédente, **caractérisé en ce que** les substrats sont en verre clair.

12. Procédé de fabrication d'un vitrage selon l'une quelconque des revendications précédentes, **caractérisé en ce que** les revêtements sont déposés par pulvérisation cathodique magnétron.

**Patentansprüche**

1. Verbundverglasung, umfassend zwei transparente Substrate, die durch eine Verbundzwischenlage getrennt sind, jedes Substrat umfassend zwei Hauptflächen, wobei das erste transparente Substrat auf einer seiner Hauptflächen mit einer funktionellen Beschichtung beschichtet ist, die auf Sonnenstrahlung und/oder Infrarotstrahlung einwirken kann, wobei die Beschichtung mindestens eine metallische funktionelle Schicht auf Silberbasis umfasst, die jeweils zwischen zwei dielektrischen Beschichtungen eingerichtet ist, wobei mindestens eine Fläche des zweiten Substrats eine Beschichtung mit niedrigem Emissionsvermögen umfasst, wobei die Beschichtung mit niedrigem Emissionsvermögen aufweist:

   - eine erste dielektrische Beschichtung,
   - eine Schicht mit niedrigem Emissionsvermögen, ausgewählt aus transparenten leitfähigen Oxiden,
   - eine zweite dielektrische Beschichtung, **dadurch gekennzeichnet, dass**
   eine der zwei Beschichtungen eine absorbierende Schicht aufweist, die eine Dicke zwischen 2 und 100 nm besitzt, ausgewählt aus:

       - Schichten auf der Basis von einem oder mehreren Metallen und/oder Metalloiden,
       - Nitridschichten aus einem oder mehreren Metallen und/oder Metalloiden,
       - Oxynitridschichten aus einem oder mehreren Metallen und/oder Metalloiden,

   von Elementen, ausgewählt aus Palladium, Niob, Wolfram, Eisen, insbesondere in Form von rostfreiem Stahl, Titan, Chrom, Molybdän, Zirkonium, Nickel, Tantal, Zink, Zinn, Silizium und Hafnium.
   wobei die Verbundverglasung eine Lichtdurchlässigkeit vorweist, die zwischen 25 und 44 % liegt.

2. Verglasung nach einem der vorstehenden Ansprüche,
   **dadurch gekennzeichnet, dass** die Beschichtung mit niedrigem Emissionsvermögen auf Fläche 4 eingerichtet ist und die funktionelle Beschichtung auf Fläche 2 der Verbundverglasung aufgebracht ist, wobei die Flächen von außen nach innen durchnummeriert sind.

3. Verglasung nach einem der vorstehenden Ansprüche,

**dadurch gekennzeichnet, dass** die funktionelle Beschichtung des ersten Substrats mehrere metallische funktionelle Schichten umfasst, die jeweils zwischen zwei dielektrischen Beschichtungen eingerichtet sind.

4. Verglasung nach einem der vorstehenden Ansprüche, **dadurch gekennzeichnet, dass** die funktionelle Beschichtung des ersten Substrats ausgehend von dem Substrat umfasst:

- eine untere dielektrische Beschichtung,
- eine metallische funktionelle Schicht,
- eine mittlere dielektrische Beschichtung,
- eine metallische funktionelle Schicht,
- eine obere dielektrische Beschichtung.

5. Verglasung nach einem der vorstehenden Ansprüche, **dadurch gekennzeichnet, dass** die dielektrischen Beschichtungen der Beschichtung des zweiten Substrats Dicken aufweisen, die zwischen 5 und 100 nm, vorzugsweise zwischen 15 und 80 nm und auf noch mehr bevorzugter Weise zwischen 20 und 75 nm liegen.

6. Verglasung nach einem der vorstehenden Ansprüche, **dadurch gekennzeichnet, dass** die Dicke der absorbierenden Schicht zwischen 4 und 50 nm, vorzugsweise zwischen 5 und 25 nm liegt.

7. Verglasung nach einem der vorstehenden Ansprüche, **dadurch gekennzeichnet, dass** sie eine Lichtdurchlässigkeit zwischen 30 und 40 % vorweist.

8. Verglasung nach einem der vorstehenden Ansprüche, **dadurch gekennzeichnet, dass** die funktionelle Beschichtung des ersten Substrats eine absorbierende Schicht aufweist.

9. Verglasung nach dem vorstehenden Anspruch, **dadurch gekennzeichnet, dass** die funktionelle Beschichtung des ersten Substrats ausgehend von dem Substrat umfasst:

- eine untere dielektrische Beschichtung,
- eine metallische funktionelle Schicht,
- eine mittlere dielektrische Beschichtung,
- eine metallische funktionelle Schicht,
- eine obere dielektrische Beschichtung,

wobei die dielektrische Zwischenbeschichtung eine absorbierende Schicht aufweist.

10. Verglasung nach einem der vorstehenden Ansprüche, **dadurch gekennzeichnet, dass** die Substrate aus Glas, insbesondere Kalk-Natron-Silikatglas, oder aus polymerem organischem Material sind.

11. Verglasung nach dem vorstehenden Anspruch, **dadurch gekennzeichnet, dass** die Substrate aus Klarglas sind.

12. Verfahren zum Herstellen einer Verglasung nach einem der vorstehenden Ansprüche, **dadurch gekennzeichnet, dass** die Beschichtungen durch Kathodenzerstäubung aufgebracht werden.


**Claims**

1. A laminated glazing comprising two transparent substrates which are separated by a lamination interlayer, each substrate comprising two main faces, the first transparent substrate being coated on one of its main faces with a functional coating capable of acting on the solar radiation and/or infrared radiation, said coating comprising at least one metallic functional layer based on silver, each deposited between two dielectric coatings,

at least one face of the second substrate comprises a low emissive coating, said low emissive coating comprising:

- a first dielectric coating,
- a low emissivity layer, chosen from transparent conductive oxides,
- a second dielectric coating,

wherein
one of the two coatings comprises an absorbing layer having a thickness comprised between 2 and 100 nm, chosen from:

- layers based on one or more metals and/or metalloids,
- nitride layers of one or more metals and/or metalloids,
- oxynitride layers of one or more metals and/or metalloids,

elements chosen from among palladium, niobium, tungsten, iron particularly in the form of stainless steel, titanium, chromium, molybdenum, zirconium, nickel, tantalum, zinc, tin, silicon and hafnium,
the laminated glaing has a light transmission of between 25 and 44%.

2. The glazing according to any one of the preceding claims, **characterized in that** the low emissive coating is provided on face 4, and the functional coating is deposited on face 2 of the laminated glazing, the faces being numbered from the exterior towards the interior of the glazing.

3. The glazing according to any one of the preceding claims, **characterized in that** the functional coating of the first substrate comprises several metal functional layers, each deposited between two dielectric coatings.

4. The glazing according to any one of the preceding claims, **characterized in that** the functional coating of the first substrate comprises, starting from the substrate:

- a lower dielectric coating,
- a metallic functional layer,
- an intermediate dielectric coating,
- a metallic functional layer,
- an upper dielectric coating.

5. The glazing according to any one of the preceding claims, **characterized in that** the dielectric coatings of the coating of the second substrate, have thicknesses between 5 and 100 nm, preferably between 15 and 80 nm, and still more preferably between 20 and 75 nm.

6. The glazing according to any one of the preceding claims, **characterized in that** the thickness of the absorbing layer is between 4 and 50 nm and even more preferably between 5 and 25 nm.

7. The glazing according to any one of the preceding claims, **characterized in that** it has a light transmission of between 30 and 40%.

8. The glazing according to any one of the preceding claims, **characterized in that** the functional coating of the first substrate comprises an absorbing layer.

9. The glazing according to the preceding claim, **characterized in that** the functional coating of the first substrate comprises, starting from the substrate:

- a lower dielectric coating,
- a metallic functional layer,
- an intermediate dielectric coating,
- a metallic functional layer,
- an upper dielectric coating,

the intermediate dielectric coating comprising an absorbing layer.

10. The glazing according to any one of the preceding claims, **characterized in that** the substrates are made of glass, in particular soda-lime-silica glass or of polymer organic material.

11. The glazing according to the preceding claim, **characterized in that** the substrates are made of clear glass.

12. A method for manufacturing a glazing according to any one of the preceding claims, **characterized in that** the coatings are deposited by magnetron cathode sputtering.

**EP 4 037 901 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006108980 A2
- EP 1060876 A2
- WO 2019110172 A
- WO 0248065 A